(19) **Europäisches Patentamt**

**European Patent Office**

**Office européen des brevets**

(11) **EP 1 120 452 A1**

(12) **EUROPEAN PATENT APPLICATION**
published in accordance with Art. 158(3) EPC

(43) Date of publication:
**01.08.2001 Bulletin 2001/31**

(51) Int Cl.[7]: **C09K 11/08**, C08L 101/00,
C08K 3/00, C08K 5/07

(21) Application number: **99938589.1**

(22) Date of filing: **23.08.1999**

(86) International application number:
**PCT/JP99/04530**

(87) International publication number:
**WO 00/60026 (12.10.2000 Gazette 2000/41)**

(84) Designated Contracting States:
**AT BE CH CY DE DK ES FI FR GB GR IE IT LI LU
MC NL PT SE**

(30) Priority: **31.03.1999 JP 9366199
31.03.1999 JP 9368699**

(71) Applicant: **Somar Corporation
Tokyo 104-8109 (JP)**

(72) Inventors:
• **SAKURAI, Fumio
Tokyo 104-8109 (JP)**
• **ASAI, Satoshi
Tokyo 104-8109 (JP)**

(74) Representative: **Waldren, Robin Michael et al
Lloyd Wise, Treager & Co.,
Commonwealth House,
1-19 New Oxford Street
London WC1A 1LW (GB)**

(54) **PHOSPHORESCENT MATERIAL, COMPOSITION CONTAINING THE SAME, AND METHOD OF ABSORBING ENERGY WITH THE SAME**

(57) A luminous material including particles of at least one luminous phosphor selected from the group consisting of a luminous phosphor containing a compound of the formula (1) shown below as mother crystals, a luminous phosphor containing a compound of the formula (2) shown below as mother crystals, and a luminous phosphor represented by the formula (3) shown below; and at least one surface treating agent bonded to surfaces of the particles and selected from the group consisting of (a) a silane compound having an aliphatic group, (b) a titanate compound having an aliphatic group and (c) a zirconate compound having an aliphatic group:

$$MAl_2O_4 \qquad (1)$$

wherein M represents at least one element selected from the group consisting of calcium, strontium and barium,

$$Sr_4Al_{14}O_{25} \qquad (2)$$

$$(SrEu)Al_2O_4 \cdot [(SrEu)O \cdot$$
$$n(Al_{1-a-b}B_bQ_a)_2O_3(OH)] \qquad (3)$$

wherein Q represents at least one element selected from the group consisting of Bi, Ca, Mg and Mn,
$0.0005 \leqq a \leqq 0.002$,
$0.001 \leqq b \leqq 0.35$ and
$1 \leqq n \leqq 7$).

**Description**

Technical Field

This invention relates to a luminous material, to a composition containing same and to an energy absorbing method using same.

Background Art

There are known a luminous phosphor containing a compound of the formula (1) shown below as mother crystals, a luminous phosphor containing a compound of the formula (2) shown below as mother crystals, and a luminous phosphor represented by the formula (3) shown below (U. S. patent No. 5,424,006 and JP-A-H11-61114):

$$MAl_2O_4 \tag{1}$$

wherein M represents at least one element selected from the group consisting of calcium, strontium and barium,

$$Sr_4Al_{14}O_{25} \tag{2}$$

$$(SrEu)\, Al_2O_4 \cdot [\, (SrEu)O \cdot$$

$$n(Al_{1-a-b}B_bQ_a)_2O_3(OH)] \tag{3}$$

wherein Q represents at least one element selected from the group consisting of Bi, Ca, Mg and Mn,
$0.0005 \leqq a \leqq 0.002$,
$0.001 \leqq b \leqq 0.35$ and
$1 \leqq n \leqq 7$).

These luminous phosphors have properties to store light energy of sunlight, lamps, etc. and to emit light in the dark by discharging the stored energy. They are also excellent in light resistance and has good decay characteristics for a long time and, hence, are usable for displays in night. These luminous phosphors, however, have several problems from the standpoint of actual use. Namely, it is difficult to uniformly disperse them in a resin. Further, since the water resistance of them is unsatisfactory, the service life is not long when they are used in outdoors.

The present invention has been made to overcome the problems of the prior art.

Disclosure of the Invention

In accordance with one aspect of the present invention, there is provided a luminous material comprising:

particles of at least one luminous phosphor selected from the group consisting of a luminous phosphor containing a compound of the formula (1) shown below as mother crystals, a luminous phosphor containing a compound of the formula (2) shown below as mother crystals, and a luminous phosphor represented by the formula (3) shown below; and
at least one surface treating agent bonded to surfaces of said particles and selected from the group consisting of (a) a silane compound having an aliphatic group, (b) a titanate compound having an aliphatic group and (c) a zirconate compound having an aliphatic group:

$$MAl_2O_4 \tag{1}$$

wherein M represents at least one element selected from the group consisting of calcium, strontium and barium,

$$Sr_4Al_{14}O_{25} \tag{2}$$

$$(SrEu)Al_2O_4 \cdot [(SrEu)O \cdot$$

$$n(Al_{1-a-b}B_bQ_a)_2O_3(OH)] \tag{3}$$

wherein Q represents at least one element selected from the group consisting of Bi, Ca, Mg and Mn,

$0.0005 \leqq a \leqq 0.002$,

$0.001 \leqq b \leqq 0.35$ and

$1 \leqq n \leqq 7$).

In another aspect, the present invention provides a composition comprising a polymer matrix, and the above luminous material dispersed in the matrix.

The luminous phosphor containing a compound of the above formula (1) or (2) as mother crystals preferably contains europium as an activator and, more preferably, further contains at least one co-activator selected from cerium, praseodymium, neodymium, samarium, terbium, dysprosium, holmium, erbium, thulium, ytterbium and lutetium. These luminous phosphors can additionally contain magnesium. Suitable examples of the luminous phosphors containing a compound of the above formula (1) or (2) as mother crystals include those represented by the following composition formulas (1a), (1b) and (2a):

$$SrAl_2O_4{:}Eu, Dy \tag{1a}$$

$$CaAl_2O_4{:}Eu,Nd \tag{1b}$$

$$Sr_4CaAl_{14}O_{25}{:}Eu, Dy \tag{2a}$$

The luminous phosphors represented by the above formulas may be commercially feasible under the trade name of "N-Yako G-300", "N-Yako BG-300" and "N-Yako V-300".

In the present invention, to surfaces of particles of the above luminous phosphor compounds, which have an average particle diameter of generally 0.1-100 μm, preferably 1-50 μm, at least one surface treating agent selected from the group consisting of (a) a silane compound having an aliphatic group, (b) a titanate compound having an aliphatic group and (c) a zirconate compound having an aliphatic group is bonded. The aliphatic group here is a group derived from an aliphatic compound and may be, for example, an alkyl group, an alkenyl group, an alkylene group or alkenylene group.

In the silane compound (a) having an aliphatic group, the aliphatic group has 1-12 carbon atoms, preferably 1-6 carbon atoms. As the silane compound, any customarily used silane coupling agent may be employed. Examples of such coupling agents include the compound represented by the following formula (I) or (II):

$$X\text{-}R^1 \text{ - } Si(OR^2)_3 \tag{I}$$

$$R^3 \text{ - } Si(OR^2)_3 \tag{II}$$

wherein $R^1$ represents a divalent aliphatic group (alkylene group or alkenylene group) having 1-22 carbon atoms, preferably 2-12 carbon atoms, more preferably 2-6 carbon atoms, $R^2$ represents an alkyl group having 1-4 carbon atoms, preferably 1-2 carbon atoms and X represents a substituent bonded to the aliphatic group $R^1$. Illustrative of the substituents are an amino group, a substituted amino group (such as phenylamino group), a glycidyloxy group, a methacryloxy group, a mercapto group and an isocyanate group. $R^3$ represents an aliphatic group (alkyl group or alkenyl group) having 1-22 carbon atoms, preferably 1-12 carbon atoms, more preferably 1-4 carbon atoms, such as a methyl group, an ethyl group, a propyl group, a hexyl group, an octyl group, a dodecyl group, a stearyl group and a vinyl group.

Specific examples of the compound of the formula (I) include γ-aminopropyltriethoxysilane, γ-aminopropyltrimethoxysilane, γ-N-phenylaminopropyl-trimethoxysilane, γ-glycidyloxypropyltrimethoxysilane, γ-methacryloxypropyltrimethoxysilane, γ-mercaptopropyltrimethoxysilane and γ-isocyanatepropyltrimethoxysilane.

Illustrative of the compounds of the formula (II) are methyltromethoxysilane, vinyltrimethoxysilane and n-hexyltrimethoxysilane.

Besides the above low molecular weight silane compounds, a polymer type silane coupling agent such as polyethoxydimethylsiloxane may be used for the purpose of the present invention.

In the titanate compound (b) having an aliphatic group, the aliphatic group has 1-22 carbon atoms, preferably 2-18 carbon atoms. Illustrative of the titanate compounds are tetra-iso-propyltitanate and its oligomers, tetra-n-butyltitanate and its oligomers, tetrastearyltitanate, dihydroxybis(lactate)titanium, di-iso-propoxybis(acetylacetonate)titanium, di-iso-butylbis(N,N-di-2-hydroxyethylaminoethyl)titanate.

The zirconate compound (c) having an aliphatic group may be, for example, tetra-n-butylzirconate, zirconium acetylacetonate and zirconium acylate.

Since the above-described surface treating agent is bonded (physically or chemically) to surfaces of particles of the luminous phosphor, the luminous phosphor according to the present invention has improved compatibility with polymer molecules and has excellent dispersibility and excellent water resistance.

Surface treatment of the luminous phosphor particles with the above surface treating agent can be carried out in any known surface treatment method and is not specifically limited. Examples of the surface treatment methods include a method in which the surface treating agent is dry-mixed with the luminous compound, a wet method in which the surface treating agent in an organic solvent is mixed with the luminous compound and an integral blend method in which the surface treating agent and the luminous compound are mixed with a polymer. Through the treatment, the surface treating agent is firmly bonded to surfaces of the luminous phosphor particles. The amount of the surface treating agent is 0.05-10 parts by weight, preferably 0.2-5 parts by weight, per 100 parts by weight of the luminous phosphor.

The luminous material of the present invention can be used as an absorbing material for light energy, sound energy, thermal energy or kinetic energy, e.g. as a light absorber, a sound proof material, a cooling material, a heat resisting material, a vibration absorber, a packing material and a shock absorber. In this case, the luminous material is suitably used in the form of a molded body in which the luminous material is dispersed in a polymer.

Polymer moldings containing the luminous material of the present invention may be produced by any known method. Thus, the luminous material is blended with a polymer or its precursor (prepolymer). The blend is then molded into a desired shape by any molding method such as an extrusion molding method, a casting molding method, an injection molding method, a calendar molding method and a spreading molding method.

The polymer or its precursor for use as a material to be molded may be, for example, a thermoplastic resin, a hardenable resin or a rubber and can be any state such as in the form of a solid, a liquid or a suspension. The solid may be powder or pellet. Suspension may be in the form of emulsion or suspension.

Examples of the thermoplastic resins include polyolefin, polystyrene, polyvinyl chloride, polyester, polyamide, polyvinyl alcohol, polycarbonate and polyacrylate.

Examples of the hardenable resins are those curable by heat or light, such as an epoxy resin, a phenoxy resin, a phenol resin, unsaturated polyester, an alkyd resin, an urethane resin, a melamine resin, a urea resin, a guanamine resin, a polyimide resin, a vinyl ester resin, a diallyl phthalate resin, a xylene resin and a silicone resin.

The amount of the luminous material in the molded body is not specifically limited but is generally 5-90 % by weight, preferably 20-80 % by weight.

The polymer molded body containing the luminous material of the present invention may be utilized for various applications such as an insulation material for an electronic or electric parts (e.g. condensers, resistors, diodes and integral circuits); a molding material for the production of sheets or films; a reinforcing material for construction materials; a rubber molding (elastomer molding) for use in vibration preventing or vibration controlling mechanisms; a sound/vibration proofing, corrosion preventing coating or sheet for transportion, domestic electric devices and eleatrical equipments; shock absorbing mechanisms for collision of automobiles, etc; and material for preventing fatigue failure by deformation of resin moldings.

While luminous phosphors have been hitherto proposed for use in displays, applications thereof for absorbing materials for sound energy, heat energy or kinetic energy, e.g. as a sound proofing material, a cooling material, a heat resisting material, a vibration absorbing material and a shock absorbing material, have never been known.

In accordance with one aspect of the present invention, there is provided a method of absorbing an energy, comprising disposing an energy absorbing material containing at least one luminous phosphor selected from the group consisting of a luminous phosphor containing a compound of the formula (1) shown below as mother crystals, a luminous phosphor containing a compound of the formula (2) shown below as mother crystals, and a luminous phosphor represented by the formula (3) shown below,

$$MAl_2O_4 \qquad\qquad\qquad (1)$$

wherein M represents at least one element selected from the group consisting of calcium, strontium and barium,

$$Sr_4Al_{14}O_{25} \qquad (2)$$

$$(SrEu)Al_2O_4 \cdot [(SrEu)O \cdot$$

$$n(Al_{1-a-b}B_bQ_a)_2O_3(OH)] \qquad (3)$$

wherein Q represents at least one element selected from the group consisting of Bi, Ca, Mg and Mn,
$0.0005 \leqq a \leqq 0.002$,
$0.001 \leqq b \leqq 0.35$ and
$1 \leqq n \leqq 7$)
at a position for receiving said energy.

As the energy absorbing material, the above-described luminous material is preferably used.

The sound proofing material containing the luminous material of the present invention may be prepared by customarily employed method. Thus, the luminous material is blended with a polymer or its precursor (prepolymer). The blend is then molded into a desired shape by any molding method such as an extrusion molding method, a casting molding method, an injection molding method, a calendar molding method and a spreading molding method. Alternatively, a coating liquid containing the luminous material and a binder is prepared and applied onto a substrate sheet to form a sound proofing layer.

The heat resisting material containing the luminous material of the present invention may be prepared by customarily employed method. Thus, the luminous material is blended with a polymer or its precursor (prepolymer). The blend is then molded into a desired shape by any molding method such as an extrusion molding method, a casting molding method, an injection molding method, a calendar molding method and a spreading molding method. The heat resisting material may be utilized for any materials requiring heat resistance, such as a paint, an adhesive or a plastic molding. The heat resisting material of the present invention may be used as an adhesive or paint in the form of powder, liquid or sheet for application on a surface of an article, requiring heat resistance, to form a coating.

The vibration absorbing or shock absorbing material containing the luminous material of the present invention may be prepared by customarily employed method. Thus, the luminous material is blended with a polymer or its precursor (prepolymer). The blend is then molded into a desired shape by any molding method such as an extrusion molding method, a casting molding method, an injection molding method, a calendar molding method and a spreading molding method.

The cooling material containing the luminous material of the present invention may be prepared by customarily employed method. Thus, the luminous material is blended with a polymer or its precursor (prepolymer). The blend is then molded into a desired shape by any molding method such as an extrusion molding method, a casting molding method, an injection molding method, a calendar molding method and a spreading molding method. A method in which a coating layer containing the luminous phosphor is applied on a surface of a metal or a method in which the luminous phosphor is blended as one of the ingredients of a metal matrix composite. The cooling material of the present invention exhibits its full effect by using an auxiliary light source having an emission spectrum in an ultraviolet region and capable of exciting the luminous phosphor, such as a cooled cathode tube or a mercury lamp.

The adhesive containing the luminous material of the present invention may be prepared by blending the luminous phosphor with a known adhesive composition.

The exterior paint containing the luminous material of the present invention may be prepared by blending the luminous phosphor with a known exterior paint composition.

As a polymer or its precursor used as a molding material, there may be used the substances described hereinabove.

The sound proofing material may be used at positions that require sound proof in buildings and traffic facilities such as automobiles, electric trains and aircrafts domestic electric devices and eleatrical equipments.

The cooling material of the present invention may be used not only for various furnaces or semiconductor devices but also for removing excess heat during cooking.

The heat resisting material may used in various field in the form of an adhesive or paint by applying same at positions requiring heat resistance in electronic or electric parts (e.g. condensers, resistors, diodes and integral circuits), exteriors of traffic facilities, rockets and space shuttles, cooking equipments and constructions.

The vibration and/or shock absorbing material of the present invention may be utilized for preventing or controlling vibration in earthquake, for absorbing vibration of precision apparatuses such as electric microscope and other measuring devices and for shock absorbing mechanisms for collision of automobiles, electric trains, etc.

The following examples will further illustrate the present invention. Parts are by weight.

Example 1

Using a small-size Henschel mixer, 100 parts of commercially available luminous phosphor G-300M (N-Yako manufactured by Nemoto & Co., Ltd.; composition: (1a) shown above; average particle diameter: about 19 μm) and 1 part of γ-glycidyloxypropyltrimethoxysilane (Sila Ace S-510 manufactured by Chisso Inc.) were dry-mixed for 20 minutes. The mixture was then heated at 130°C for 1 hour to obtain a surface treated luminous material G-300M(S1).

Example 2

Using a small-size Henschel mixer, 100 parts of commercially available luminous phosphor G-300C (N-Yako manufactured by Nemoto & Co., Ltd.; composition: (1a) shown above; average particle diameter: about 42 μm) and 1 part of γ-glycidyloxypropyltrimethoxysilane (Sila Ace S-510) were dry-mixed for 20 minutes. The mixture was then heated at 130°C for 1 hour to obtain a surface treated luminous material G-300C(S2).

Example 3

Using a small-size Henschel mixer, 100 parts of commercially available luminous phosphor G-300F (N-Yako manufactured by Nemoto & Co., Ltd.; composition: (1a) shown above; average particle diameter: about 9 μm) and 0.2 part of γ-glycidyloxypropyltrimethoxysilane (Sila Ace S-510) were dry-mixed for 20 minutes. The mixture was then heated at 130°C for 1 hour to obtain a surface treated luminous material G-300F(S2).

Example 4

Using a small-size Henschel mixer, 100 parts of commercially available luminous phosphor G-300M (N-Yako manufactured by Nemoto & Co., Ltd.; composition: (1a) shown above; average particle diameter: about 19 μm) and 0.2 part of γ-glycidyloxypropyltrimethoxysilane (Sila Ace S-510) were dry-mixed for 20 minutes. The mixture was then heated at 130°C for 1 hour to obtain a surface treated luminous material G-300M(S2).

Example 5

Using a small-size Henschel mixer, 100 parts of commercially available luminous phosphor G-300F (N-Yako manufactured by Nemoto & Co., Ltd.; composition: (1a) shown above; average particle diameter: about 9 μm) and 1 part of γ-glycidyloxypropyltrimethoxysilane (Sila Ace S-510) were dry-mixed for 20 minutes. The mixture was then heated at 130°C for 1 hour to obtain a surface treated luminous material G-300F(S1).

Example 6

Using a small-size Henschel mixer, 100 parts of commercially available luminous phosphor G-300C (N-Yako manufactured by Nemoto & Co., Ltd.; composition: (1a) shown above; average particle diameter: about 42 μm) and 1 part of γ-mercaptopropyltrimethoxysilane (NUC silane coupling agent A-189 manufactured by Nippon Unicar Inc.) were dry-mixed for 20 minutes. The mixture was then heated at 130°C for 1 hour to obtain a surface treated luminous material G-300C(SH).

Example 7

A mixture of a main agent (containing luminous material G-300M(S1) obtained in Example 1) and a curing agent having compositions (parts by weight) shown in Table 1 was cured under curing conditions of 110°C and 2 hours to obtain a sample. The properties of the sample were evaluated to give the results shown in Table 1.

## Table 1

| | | Example 7 |
|---|---|---|
| Main agent | G-300M(S1) | 150 |
| | Epikote | 100 |
| | Aerosil R-974 | 2 |
| Curing agent | SUNMIDE #76TK | 50 |
| | Aerosil R-974 | 0.5 |
| Main agent/curing agent ratio | | 100/20 |
| Tensile shear strength $(kgf/cm^2)$ | Standing time of 0 at 150°C (after standing at the room temperature for 1 day) | 140 |
| | Standing time of 200 hours at 150°C | 220 |
| Tensile strength $(kgf/cm^2)$ | Pulling rate: 5 mm/min | 585 |
| | Pulling rate: 500 mm/min | 680 |
| Impact resistance (mm) | Minimum fracture height | 290 |

Comparative Example 1

Example 7 was repeated in the same manner as described except that Crystalite C(S1) was substituted for luminous material G-300M(S1). The properties of the sample were evaluated to give the results shown in Table 2. Crystalite C(S1) was obtained by surface treating 100 parts of commercially available silica filler Crystalite C with 1 part of γ-glycidyloxypropyltrimethoxysilane (Sila Ace S-510) by a dry method.

## Table 2

| | | Comparative Example 1 |
|---|---|---|
| Main agent | Crystalite C(S1) | 150 |
| | Epikote 815 | 100 |
| | Aerosil R-974 | 2 |
| Curing agent | SUNMIDE #76TK | 50 |
| | Aerosil R-974 | 0.5 |
| Main agent/curing agent ratio | | 100/20 |
| Tensile shear strength (kgf/cm$^2$ ) | Standing time of 0 at 150°C (after Standing at at the room temperature for 1 day) | 126 |
| | Standing time of 200 hours at 150°C | 196 |
| Tensile strength (kgf/cm$^2$ ) | pulling rate 5 mm/min | 590 |
| | pulling rate 500 mm/min | 624 |
| Impact resistance (mm) | Minimum fracture height | 250 |

Example 8

Luminous material G-300C(S2) obtained in Example 2 was homogeneously mixed with Agent A shown in Table 3, to which Agent B shown in Table 3 was further mixed homogeneously. The mixture was cured at 110°C for 2 hours to obtain a sample. The properties of the sample were evaluated to give the results shown in Table 3.

Table 3

| | Example 8 | |
|---|---|---|
| Main agent | Quick 30 (Agent A) | 50 |
| | G-300C(S2) | 50 |
| Curing agent | Quick 30 (Agent B) | 50 |
| Main gent/curing agent ratio | | 100/50 |
| Tensile shear strength(kgf/cm$^2$) | Standing time of 0 at 130°C (after Standing at the room temperature for 1 day) | 242 |
| | 100 hours | 234 |
| | 200 hours | 210 |
| Heat cycle number and tensile shear strength (kgf/cm$^2$) | 130°C, 60 minutes ←→ -30°C, 60 minutes    50 cycles | 221 |
| | 130°C, 60 minutes ←→ -30°C 60 minutes    90 cycles | 215 |

Comparative Example 2

Example 8 was repeated in the same manner as described except that Harimic S-CO(S2) was substituted for G-300C(S2). The properties of the sample were evaluated to give the results shown in Table 4. Harimic S-CO(S2) shown in Table 4 was obtained by surface treating 100 parts of Harimic S-CO with 0.2 part of γ-glycidyloxypropyltrimethoxysilane (Sila Ace S-510) by a dry method.

Table 4

| | Example 2 | |
|---|---|---|
| Main agent | Quick 30 (Agent A) | 50 |
| | Herimic S-CO(S2) | 50 |
| Curing agent | Quick 30 (Agent B) | 50 |
| Main gent/curing agent ratio | | 100/50 |
| Tensile shear strength (kgf/cm$^2$) | Standing time of 0 at 130°C (after standing at the room temperature for 1 day) | 224 |
| | 100 hours | 204 |
| | 200 hours | 193 |
| Heat cycle number and tensile shear strength (kgf/cm$^2$) | 130°C, 60 minutes ←→ -30°C, 60 minutes  50 cycles | 217 |
| | 130°C, 60 minutes ←→ -30°C 60 minutes  90 cycles | 204 |

Examples 9-11 and Comparative Examples 3-5

Mixtures having compositions shown in Tables 5 and 6 were prepared and cured at 110°C for 2 hours to obtain samples. The properties of the samples were evaluated to give the results shown in Tables 7 and 8.

Table 5

| | | Example | | |
|---|---|---|---|---|
| | | 9 | 10 | 11 |
| Main agent | Epikote 815 | 100 | 100 | 100 |
| | Aerosil R-974 | 2 | 2 | 2 |
| | G-300 F (S2) | 150 | – | – |
| | G-300 M (S2) | – | 150 | – |
| | G-300 C (S2) | – | – | 150 |
| | Crystalite A1(S2) | – | – | – |
| | Crystalite C(S2) | – | – | – |
| Total | | 252 | 252 | 252 |
| Curing agent | SUNMIDE #76TK | 100 | 100 | 100 |
| | Aerosil R-974 | 2 | 2 | 2 |
| Total | | 102 | 102 | 102 |
| Main agent/curing agent mixing ratio | | 100/40.5 | | |

Table 6

| | | Comparative Example | | |
|---|---|---|---|---|
| | | 3 | 4 | 5 |
| Main agent | Epikote 815 | 100 | 100 | 100 |
| | Aerosil R-974 | 2 | 2 | 2 |
| | G-300 F (S2) | – | – | – |
| | G-300 M (S2) | – | – | – |
| | G-300 C (S2) | – | – | – |
| | Crystalite A1(S2) | – | 150 | – |
| | Crystalite C(S2) | – | – | 150 |
| Total | | 102 | 252 | 252 |
| Curing agent | SUNMIDE #76TK | 100 | 100 | 100 |
| | Aerosil R-974 | 2 | 2 | 2 |
| Total | | 102 | 102 | 102 |
| Main agent/curing agent mixing ratio | | 100/100 | 100/40.5 | |

Table 7

| | | | Example | | |
|---|---|---|---|---|---|
| | | | 9 | 10 | 11 |
| Impact resistance | Minimum fracture, mm | | 180 | 190 | 150 |
| Heat resisting tensile shear bonding strength (standing at 130°C) | Kgf/cm² | Initial | 115 | 129 | 133 |
| | | After 170 hours | 154 | 168 | 152 |
| | | After 420 hours | 150 | 154 | 148 |
| Tensile Strength | Kgf/cm² | 5 mm/min | 458 | 411 | 384 |
| | | 500 mm/min | 488 | 420 | 391 |
| | Elongation % | 5 mm/min | 4.8 | 4.2 | 3.9 |
| | | 500 mm/min | 4.7 | 4.1 | 4 |
| Heat resisting impact tensile shear bonding strength (125°C, 30 minutes←→ -10°C, 30 minutes) | Kgf/cm² | Initial | 115 | 129 | 133 |
| | | after 300 cycles | 140 | 155 | 171 |
| | | after 500 cycles | 158 | 163 | 177 |

Table 8

| | | | Comparative Example | | |
|---|---|---|---|---|---|
| | | | 3 | 4 | 5 |
| Impact resistance | Minimum fracture, mm | | 180 | 130 | 120 |
| Heat resisting tensile shear bonding strength(standing at 130°C) | Kgf/cm² | Initial | 94 | 122 | 135 |
| | | After 170 hours | 143 | 134 | 132 |
| | | After 420 hours | 142 | 134 | 130 |
| Tensile Strength | Kgf/cm² | 5 mm/min | 452 | 475 | 400 |
| | | 500 mm/min | 548 | 419 | 371 |
| | Elongation % | 5 mm/min | 9.5 | 4.2 | 3.8 |
| | | 500 mm/min | 11.2 | 3.4 | 3.4 |
| Heat resisting impact tensile shear bonding strength(125°C, 30 minutes←→-10°C 30 minutes) | Kgf/cm² | Initial | 94 | 122 | 135 |
| | | After 300 cycles | 145 | 123 | 130 |
| | | After 500 cycles | 143 | 136 | 132 |

Example 12

A mixture of luminous material G-300C(HS) obtained in Example 6 with the curing agent having the composition shown in Table 9 was applied to a polyethylene terephthalate film using a Baker applicator to a thickness of 500 μm. This was then dried with heating at 80°C for 5 minutes and at 130°C for another 5 minutes to obtain a luminous material-containing layer having a thickness of 190 μm. The impact resistance of the laminate film was evaluated to give the results shown in Table 9.

Comparative Example 5

Example 12 was repeated in the same manner as described except that Crystalite A2(SH) was substituted for G-300C(SH), thereby obtaining a laminate film. The impact resistance of the laminate film was evaluated to give the results shown in Table 9. Crystalite A2(SH) was obtained by dry-mixing 100 parts of Crystalite A2 with 1 part of γ-mercaptopropyltrimethoxysilane (NUC silane coupling agent A-189) with a small size Henschel mixer for 20 minutes, followed by heating at 130°C for 1 hour.

Table 9

| | Raw material | Eaxmple 12 | Comparative 6 |
|---|---|---|---|
| Main agent | Acrydic 56-898 | 100 | 100 |
| | G-300C (SH) | 55 | |
| | Crystalite A2 (SH) | | 55 |
| | Florad FC-430 | 0.1 | 0.1 |
| Curing agent | Banoc D-750 | 10 | 10 |
| | OH/NCO | 100/100 | 100/100 |
| Impact resistance test result (mm) | | 20 | 55 |

Example 13

100 Parts of a methyl ethyl ketone solution containing 30 % by weight of a polyester resin (Byron 200) were mixed with 30 parts of G-300F(S1) obtained in Example 5. The mixture was cast on a PET film and dried at 80°C for 30 minutes to obtain a film with a thickness of 50 $\mu$m. The film was evaluated for its sound proof properties It was found that noise level was 80-82 dB.

Comparative Example 7

Example 13 was repeated in the same manner as described except that Harimic S-CO(S1) was substituted for G-300F(S1). The sound proof properties of the sample were evaluated to reveal that the noise level was 85-87 dB and higher than that in Example 11.

Comparative Example 8

Example 7 was repeated in the same manner as described except that G-300M was used as such without being surface-treated. The properties of the sample thus obtained were as summarized in Table 10.

Table 10

| Tensile shear strength (kgf/cm$^2$) | Standing time of 0 at 150°C (after standing at room temperature for 1 day) | 121 |
|---|---|---|
| | Standing time of 200 hours at 150°C | 190 |
| Tensile strength (kgf/cm$^2$) | Pulling rate 5 mm/min | 392 |
| | Pulling rate 500 mm/min | 381 |
| Impact resistance (mm) | Minimum fracture height (mm) | 180 |

Details of the test methods used for the evaluation of the properties of samples are as follows.

(1) Tensile shear strength: in accordance with JIS K6850

(2) Tensile strength: JIS K7113-1995

(3) Impact resistance:
A sample plate with a thickness of 1 mm prepared by casting and curing at 110°C for 2 hours was cut into a square sample having a size of 1 mm x 20 mm x 20 mm. The sample is subjected to fracture test using a du Pont Impact tester having a striker (weight: 300 g) with a radius of 1/4 inch at its tip. Minimum height causing fracture is evaluated at 10 mm unit. In the case of Example 12 and Comparative Example 6, however, the test is carried out using a 100 g striker and at 5 mm unit.

(4) Heat cycle test:

A sample similar to that used in tensile shear bonding test is tested with Heat Impact Tester TSE-10 manufactured by Tabai Espec Inc.

(5) Sound proof properties:

To an integration averaging-type noise meter NL-04 (manufactured by Lion Inc.) is attached a cylindrical sound proofing member having a thickness of 10 cm. Sample film is mounted on a microphone at a position spaced apart therefrom a distance of 20 mm. Noise level is measured at a determined position spaced apart from a driving motor a distance of 10 cm (noise level: 94-98 dB).

Details of the materials used in the above tests are as follows:

(1) G-300F: N-Yako (average particle diameter: about 9 μm) manufactured by Nemoto & Co., Ltd.
(2) G-300M: N-Yako (average particle diameter: about 19 μm) manufactured by Nemoto & Co., Ltd.
(3) G-300C: N-Yako (average particle diameter: about 42 μm) manufactured by Nemoto & Co., Ltd.
(4) Epikote 815: Epoxy resin manufactured by Yuka-Shell Epoxy K. K.
(5) Aerosil R-972: Super fine silica manufactured by Nippon Aerosil Co., Ltd.
(6) SUNMIDE #76TK: Polyamide amine resin manufactured by Sanwa Chemical Industry Co., Ltd.
(7) Quick 30: 2-Component type, room temperature curable epoxy resin adhesive agent manufactured by Konishi Co., Ltd.
(8) Harimic S-CO: Spherical silica fine powder (average particle diameter: about 24 μm) manufactured by Micron Inc.
(9) Crystalite A1: Spherical silica fine powder (average particle diameter: about 10 μm) manufactured by Tatsumori Ltd.
(10) Crystalite C: Spherical silica fine powder (average particle diameter: about 20 μm) manufactured by Tatsumori Ltd.
(11) Crystalite A2: Spherical silica fine powder (average particle diameter: about 28 μm) manufactured by Tatsumori Ltd.
(12) PET film: Smilese NS-50PET manufactured by Kaito Chemical Industry Co., Ltd.
(13) Vylon 200: Polyester resin manufactured by Toyo Boseki K. K.
(14) Sila Ace S-510: γ-glycidyloxypropyltrimethoxysilane silane coupling agent manufactured by Chisso Corp.
(15) NUC A-189: γ-mercaptopropyltrimethoxysilane silane coupling agent manufactured by Nippon Unicar Co., Ltd.
(16) Acrydic 56-898: acrylic polyol manufactured by Dainippon Ink Chemical Industry Co., Ltd.
(17) Florad FC-430: fluorine-type surfactant manufactured by 3M Inc.
(18) Banoc D-750: Isocyanate curing agent manufactured by Dainippon Ink & Chemicals, Incorporated.

## Claims

1.  A luminous material comprising:

    particles of at least one luminous phosphor selected from the group consisting of a luminous phosphor containing a compound of the formula (1) shown below as mother crystals, a luminous phosphor containing a compound of the formula (2) shown below as mother crystals, and a luminous phosphor represented by the formula (3) shown below; and
    at least one surface treating agent bonded to surfaces of said particles and selected from the group consisting of (a) a silane compound having an aliphatic group, (b) a titanate compound having an aliphatic group and (c) a zirconate compound having an aliphatic group:

    $$MAl_2O_4 \qquad\qquad (1)$$

    wherein M represents at least one element selected from the group consisting of calcium, strontium and barium,

$$Sr_4Al_{14}O_{25} \tag{2}$$

$$(SrEu)Al_2O_4 \cdot [(SrEu)O \cdot$$

$$n(Al_{1-a-b}B_bQ_a)_2O_3(OH)] \tag{3}$$

wherein Q represents at least one element selected from the group consisting of Bi, Ca, Mg and Mn,
$0.0005 \leqq a \leqq 0.002$,
$0.001 \leqq b \leqq 0.35$ and
$1 \leqq n \leqq 7$).

2. A composition comprising a polymer matrix, and a luminous material according to claim 1 dispersed in said matrix.

3. A molded body of a composition according to claim 2.

4. A method of absorbing an energy, comprising disposing an energy absorbing material containing at least one luminous phosphor selected from the group consisting of a luminous phosphor containing a compound of the formula (1) shown below as mother crystals, a luminous phosphor containing a compound of the formula (2) shown below as mother crystals, and a luminous phosphor represented by the formula (3) shown below,

$$MAl_2O_4 \tag{1}$$

wherein M represents at least one element selected from the group consisting of calcium, strontium and barium,

$$Sr_4Al_{14}O_{25} \tag{2}$$

$$(SrEu)Al_2O_4 \cdot [(SrEu)O \cdot$$

$$n(Al_{1-a-b}B_bQ_a)_2O_3(OH)] \tag{3}$$

wherein Q represents at least one element selected from the group consisting of Bi, Ca, Mg and Mn,
$0.0005 \leqq a \leqq 0.002$,
$0.001 \leqq b \leqq 0.35$ and
$1 \leqq n \leqq 7$)
at a position for receiving said energy.

5. A method according to claim 4, wherein said energy is selected from a sound energy, a thermal energy and a kinetic energy.

6. A method according to claim 4, wherein said luminous phosphor is in the form of particles and wherein said particles have surfaces to which at least one surface treating agent selected from the group consisting of (a) a silane compound having an aliphatic group, (b) a titanate compound having an aliphatic group and (c) a zirconate compound having an aliphatic group is bonded.

EP 1 120 452 A1

## INTERNATIONAL SEARCH REPORT

International application No.

PCT/JP99/04530

**A. CLASSIFICATION OF SUBJECT MATTER**
Int.Cl$^6$   C09K11/08, C08L101/00, C08K03/00, 5/07, C09K5/3457

According to International Patent Classification (IPC) or to both national classification and IPC

**B. FIELDS SEARCHED**

Minimum documentation searched (classification system followed by classification symbols)
Int.Cl$^6$   C09K11/00-11/89, C08L101/00, C08K3/00, 5/07, C09K5/3457

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 8-183955, A (YKK K.K.), 16 July, 1996 (16.07.96), & CA, 2165379, A   & EP, 721007, A1 & US, 5607621, A   & CN, 1133874, A & TW, 336944, A | 1-6 |
| Y | JP, 9-40944, A (Seiko Instr. Inc.), 10 February, 1997 (10.02.97)   (Family: none) | 1-6 |
| Y | JP, 9-95671, A (Toshiba Corporation), 08 April, 1997 (08.04.97)      (Family: none) | 1-6 |
| Y | JP, 6-270155, A (Sekisui Chemical Co., Ltd.), 27 September, 1994 (27.09.94)   (Family: none) | 1-6 |
| Y | JP, 9-302142, A (Fukuvi Chemical Ind. Co., Ltd.), 25 November, 1997 (25.11.97)     (Family: none) | 1-6 |
| P,X | JP, 11-158205, A (Sumitomo Chemical Company, Limited), 15 June, 1999 (15.06.99), Claim 11     (Family: none) | 1-4 |

☐ Further documents are listed in the continuation of Box C.     ☐ See patent family annex.

| | |
|---|---|
| \* Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>   21 September, 1999 (21.09.99) | Date of mailing of the international search report<br>   05 October, 1999 (05.10.99) |
| Name and mailing address of the ISA/<br>   Japanese Patent Office | Authorized officer |
| Facsimile No. | Telephone No. |

Form PCT/ISA/210 (second sheet) (July 1992)

17